# EUROPEAN PATENT SPECIFICATION

(11) **EP 3 452 795 B1**
(45) Date of publication and mention of the grant of the patent: **30.12.2020**
(21) Application number: 17723468.9
(22) Date of filing: 03.05.2017
(51) Int. Cl.: G01M 3/00, G01M 3/38, G01B 11/24, G01N 21/954

(54) **INSPECTION METHOD**
ÜBERPRÜFUNGSVERFAHREN
PROCÉDÉ D'INSPECTION

(30) Priority: 04.05.2016 GB 201607804
(43) Date of publication of application: 13.03.2019
(73) Proprietor: E M&I (Maritime) Limited, St Heller JE2 3QA (JE)
(72) Inventor: CONSTANTINIS, Daniel, St Helier JE2 3RT (GB)
(74) Representative: HGF
(86) International application number: PCT/GB2017/051234
(87) International publication number: WO 2017/191447

(56) References cited:
- WO-A1-2009/120813
- US-A- 5 425 279
- US-A1- 2014 261 137

## Description

The present invention relates to a method of inspecting the inside of a vessel.

Entry of personnel into confined spaces, including for the inspection of pressure vessels and tanks, is hazardous and costly and should be avoided where practicable.

The Oil Gas and indeed many other industries are concerned with the safety risks involved in people entering confined spaces. Additional risks are encountered when the confined space involves working at height, for example in a large storage tank or on a ship or offshore production facility.

There is however a regulatory and classification requirement to inspect these confined spaces at regular intervals to assure the integrity of the structure. Such inspections involve having a competent person carry out a General Visual Inspection (GVI) and a Close Visual Inspection (CVI) of critical parts of the structure and an assessment of any structural deformation by various visual and/or mechanical means.

Where the structure shows signs of corrosion then there may be a further requirement to measure the remaining thickness of the steel to confirm the structural and leak integrity of the component or tank respectively.

Regulators and classification societies have provided guidance for alternative inspection methods and have stated that any alternative methods must provide an 'equivalent' quality and scope of inspection. Thus an alternative method should provide a GVI, CVI, structural deformation survey and a means of measuring wall thickness of critical components where there is evidence of corrosion.

US5425279 discloses that petroleum coking drums and other vessels may be inspected to determine if dimensional changes or bulges have occurred in the surface of the vessel. An inspection device is used which includes a reflected laser light measuring survey apparatus, and a video camera mounted on a frame. Data regarding the positions of measured points may be converted for display using a CAD computer program to illustrate bulge contours and peaks indicative of unusual stress or degradation of the vessel structure.

WO2009120813 discloses a system to perform automated three-dimensional image registration of a part within an inspection cell. The system includes a laser-ultrasound inspection device having a scanning head to generate ultrasonic surface displacements in a part, an inspection laser, and an interferometer to collect phase modulated light reflected by the part. A laser ultrasound inspection program product is adapted to perform automated three-dimensional image registration of the part.

US 20140261137 discloses a system and method for remote inspection of a liquid filled tank or structure. A remotely operated underwater vehicle includes at least one camera for providing a video feed to an operator. The remotely operated underwater vehicle is piloted through tanks to be inspected, scanning pre-installed location identifier tags and transmitting video and sensor data to the operator via the operator's computer.

In accordance with a first aspect of the present invention there is provided a method of inspecting the inside of a vessel, the method including the steps of:
obtaining a visual image of the inside of the vessel using a camera;
using a first three-dimensional scanner to obtain a low-resolution image of one or more surfaces of the inside of the vessel; and
using a second three-dimensional scanner to obtain a high-resolution image of one or more objects inside of the vessel.

It may be an advantage of the present invention that the method of inspecting the inside of a vessel is in a manner equivalent to that which a skilled surveyor or engineer would achieve if they were inside the vessel and had access to all parts of the vessel including within 'arm's length' of components subject to a Close Visual Inspection.

The steps of the method may be in any order. The inside of the vessel may be referred to as a confined space. The method of inspecting the inside of the vessel may be referred to as a method of inspection.

It may be an advantage of the present invention that the method of inspection is equivalent or at least substantially equivalent to the inspection that a competent person would achieve if they entered the vessel.

The step of obtaining a visual image of the inside of the vessel using a camera is typically for a General Visual Inspection (GVI) and/or Close Visual Inspection (CVI) of the inside of the vessel.

The camera is typically a high performance camera. The camera may be a VT 360 PT HD inspection camera supplied by visatec GmbH, a DEKRA company.

The method may include the step of positioning and/or locating the camera at different levels inside and/or from a particular access point and/or from different access points into the vessel. The camera may be mounted and/or attached to a pole so that it can be positioned in a suitable location to obtain the visual image of the inside of the vessel. The pole may be made of carbon fibre. The camera may be attached to the pole with an articulated joint. The articulated joint may mean the camera can be better positioned in a suitable location to obtain the visual image of the inside of the vessel.

It may be an advantage of the present invention that the camera can be positioned in the vessel using the pole and/or articulated joint such that the visual image obtained is free from shadow areas.

The camera normally has one or more of pan, tilt, zoom and integral lighting functionality. This may help in the generation of the General Visual Inspection (GVI) and/or Close Visual Inspection (CVI) of the inside of the vessel. These inspections may be part of and/or in accordance with an approved inspection plan.

The camera may be capable of operating in extreme conditions, including toxic gases, high levels of heat and humidity.

The camera may be operable in and/or under water. The camera may be referred to as watertight. In use the vessel may be dry or fully or partially filled with fluid, typically water.

The camera may be stabilised, that is the camera may be releasably attached to the vessel. The camera may be releasably attached to the vessel using a stabilising pole. The stabilising pole may be magnetically attached to the vessel. During the method of inspecting the inside of the vessel, the vessel may move. The vessel may be on or part of a moving ship or Floating Production, Storage and Offloading unit (FPSO) or Mobile Offshore Drilling Unit or Accommodation Vessel for example.

It may be an advantage of the present invention that, the quality of the visual image of the inside of the vessel that is obtained using the camera when the vessel is moving, is improved if the camera is stabilised using the stabilising pole.

Additionally or alternatively, the method may include the step of using the camera to obtain a plurality of visual images and normally in quick succession. It may be an advantage of the present invention that taking a plurality of visual images, normally in quick succession, mitigates any movement of the vessel, such that movement of the vessel does not substantially affect the overall quality of the visual image obtained.

The step of using the second three-dimensional scanner to obtain a high-resolution image of one or more objects inside of the vessel may be used to obtain linear dimensions of the one or more objects. The step may include obtaining more than one high-resolution image. At least one high-resolution image may be superimposed onto one of the objects. Using this superimposed image as a scale, the size of other objects may be measured. The objects are typically in an image frame. The one or more objects may include a crack in the vessel and/or crack anomalies. The one or more objects may be small components in the vessel.

The second three-dimensional scanner may be a short range scanner. Using the short range scanner it is typically possible to scan one or more objects with an accuracy of normally ±0.5mm, typically ±0.1mm. The accuracy may be referred to as high accuracy. The short range scanner may produce data which can then be replicated to a high accuracy. The method may include the step of using the data to produce a model of the object using a 3D printer.

The step of using a second three-dimensional scanner to obtain a high-resolution image of one or more objects inside of the vessel may be referred to as a short range inspection.

The second three-dimensional scanner may be a non-contact active, triangulation based 3D scanner.

The step of using a first three-dimensional scanner to obtain a lower-resolution image of one or more surfaces of the inside of the vessel may be referred to as a large volume scan or inspection. Using the first three-dimensional scanner it is typically possible to scan one or more surfaces of the inside of the vessel with an accuracy of normally ±2mm, typically ±1mm.

The low-resolution image of one or more surfaces of the inside of the vessel may be a three-dimensional image of the inside of the vessel. The three-dimensional image may be used to assess for any structural deformation of the vessel.

The low-resolution image may be a point cloud image. The method normally includes the step of manipulating the point cloud image so that a point of view of the point cloud image is in a position and/or is moved to a position where, the vessel can be assessed and/or viewed for being one or more of straight, plumb, square and free from structural deformation.

The first three-dimensional scanner may be a non-contact active, time-of-flight based 3D scanner.

The method may include the step of positioning and/or locating the first and/or second three-dimensional scanner at different levels inside the vessel. The first and/or second three-dimensional scanner may be mounted and/or attached to a pole so that it can be positioned in a suitable location to obtain the high and/or low resolution image from inside the vessel. The pole may be made of carbon fibre. The first and/or second three-dimensional scanner may be attached to the pole with an articulated joint. The articulated joint may mean the first and/or second three-dimensional scanner can be better positioned in a suitable location to obtain the high and/or low resolution image from inside of the vessel.

It may be an advantage of the present invention that the first and/or second three-dimensional scanner can be positioned in the vessel using the pole and/or articulated joint such that the high and/or low resolution image obtained is free from shadow areas.

The first and/or second three-dimensional scanner may be capable of operating in extreme conditions, including toxic gases, high levels of heat and humidity.

The first and/or second three-dimensional scanner may be operable in and/or under water. The first and/or second three-dimensional scanner may be referred to as watertight. In use the vessel may be dry or fully or partially filled fluid, typically with water.

The first and/or second three-dimensional scanner may be stabilised, that is the first and/or second three-dimensional scanner may be releasably attached to the vessel. The first and/or second three-dimensional scanner may be releasably attached to the vessel using a stabilising pole. The stabilising pole may be magnetically attached to the vessel. During the method of inspecting the inside of the vessel, the vessel may move. The vessel may be on or part of a moving ship or Floating Production, Storage and Offloading unit (FPSO) for example.

It may be an advantage of the present invention that the quality of the image of the inside of the vessel that is obtained using the first and/or second three-dimensional scanner when the vessel is moving is improved if the first and/or second three-dimensional scanner is stabilised using the stabilising pole.

The pole and/or stabilising pole used for the camera is typically the same but may be different to the pole and/or stabilising pole used for the first and/or second three-dimensional scanner.

The first three-dimensional scanner can normally obtain the low-resolution image of one or more surfaces of the inside of the vessel without using and/or the need for visible light inside the vessel. The low-resolution image of one or more surfaces of the inside of the vessel is usually in black and white and/or greyscale. The low-resolution image of one or more surfaces of the inside of the vessel is usually without colour.

A colour image is often required for the inspection of the inside of the vessel. A colour image is typically needed to assess structural integrity of the vessel. One or more of rust, staining and coating breakdown are more easily or only assessable using a colour image. The method may further include the step of upgrading the low-resolution image by taking visible light images at specified intervals during the step of using the first three-dimensional scanner. The colour data obtained from the visible light images may then be used to modify the low-resolution image to create a colour image, typically an accurate colour image, of the inside of the vessel. The visible light images may be taken using the camera.

The visual image, high-resolution image and low-resolution image may be combined to provide an overall or complete image of the inside of the vessel. The method of inspecting the inside of the vessel typically produces an overall or complete image of the inside of the vessel. The overall or complete image of the inside of the vessel is typically used to provide an inspection of the inside of the vessel.

The vessel may be referred to as a confined space. The vessel may be tens of meters in one or more of length, depth and height. The vessel may be a tank on and/or part of a ship. The ship may be a drillship or a cargo ship. The tank may be a ballast and/or water ballast tank. The tank may be a fuel and/or oil tank. The tank may be a J-tank. The vessel may be on or part of a Floating Production, Storage and Offloading unit (FPSO). The vessel may be a pressure vessel.

The one or more objects inside the vessel may be one or more parts of the vessel or one or more components inside the vessel. The one or more surfaces of the inside of the vessel are typically one or more of the inside walls of the vessel.

The first and second three-dimensional scanners may emit the same or different types of radiation. The radiation may be light, laser light, ultrasound or x-ray.

It may be an advantage of the present invention that the method of inspecting the inside of the vessel has one or more of enhanced safety, reduced cost in preparation and/or inspection and is a faster method of inspecting a vessel which may increase system availability, require fewer personnel and reduce downtime compared to conventional inspection methods.

The method may further include a structural assessment of the vessel by a competent person and/or engineer before the steps of using the camera, first three-dimensional scanner, and second three-dimensional scanner. The structural assessment will normally identify one or more of the probable deterioration, structural deformation, thickness gauging requirements, anomalies, work scope, defect tolerance standards and reporting standards for and/or in the vessel. The method may include the step of using an ultrasonic scanner and/or non-immersion ultrasonic scanner to measure the thickness of a wall or walls of the vessel.

The structural assessment of the vessel by a competent person and/or engineer may also include assessing where the camera, first three-dimensional scanner, and second three-dimensional scanner will be inserted into the vessel. The camera, first three-dimensional scanner, and second three-dimensional scanner are typically inserted into the vessel through an aperture and/or hole in the vessel. The aperture and/or hole may already exist and may be a man entry hatch, butterworth hatch or inspection port.

The method may include the step of preparing the aperture and/or hole so that a fluid and/or gas tight seal can be formed between the pole and/or stabilising pole and the aperture during the inspection of the inside of the vessel. It may be an advantage of the present invention that the fluid and/or gas tight seal minimises the need to one or more of clean, vent or empty the vessel during the inspection of the inside of the vessel. This may reduce the overall cost of the method of inspecting the inside of the vessel.

The method may further include filling or at least partially filling the vessel with a liquid, typically water. This may be particularly useful when the vessel has an internal shape such that one or more of the camera, first three-dimensional scanner, and second three-dimensional scanner cannot gain access to and or see all of the inside of the vessel, one or more objects inside of the vessel or one or more surfaces of the inside of the vessel respectively. The method then typically further includes mounting and/or attaching the camera, first three-dimensional scanner, and second three-dimensional scanner to a Remotely Operated Vehicle (ROV).

An immersion ultrasonic device and/or other inspection tools may be mounted and/or attached to the Remotely Operated Vehicle (ROV). The immersion ultrasonic device and/or other inspection tools may be used to measure the thickness of a wall or walls of the vessel. The other inspection tools may provide a gauging capability. The Remotely Operated Vehicle (ROV) may be stabilised.

The method may include the step of using the camera to obtain a plurality of visual images of the inside of the vessel. The plurality of visual images may be obtained from a number of different positons to create a photogrammetric image. The photogrammetric image may be used to measure and/or inspect the inside of the vessel, one or more objects inside of the vessel and one or more surfaces of the inside of the vessel.

An embodiment of the invention will now be described by way of example only and with reference to the accompanying drawings, in which:
Figure 1 shows a camera on a pole in a vessel;
Figure 2 shows a visual image of an inside of the vessel taken underwater;
Figure 3 shows the camera at the bottom of the vessel and objects inside the vessel;
Figure 4 shows a laser point cloud image;
Figure 5 shows a high-resolution image of an object inside the vessel;
Figure 6 shows a model of the object shown in Figure 4, produced using a 3D printer; and
Figure 7 shows a photogrammetric image of another object inside the vessel.

There is herein described a method of inspecting the inside of a vessel, the method including the steps of obtaining a visual image of the inside of the vessel using a camera; using a first three-dimensional scanner to obtain a low-resolution image of one or more surfaces of the inside of the vessel; and using a second three-dimensional scanner to obtain a high-resolution image of one or more objects inside of the vessel.

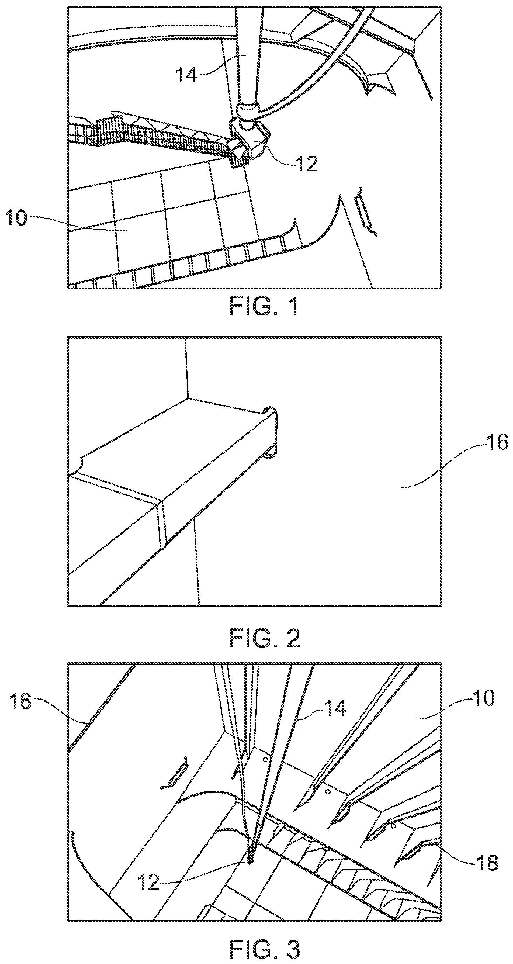

Figure 1 shows a camera 12 on a pole 14 in a vessel 10. The vessel 10 is dry, that is it is empty. The vessel 10 is a tank and a confined space. The camera is a VT 360 PT HD inspection camera supplied by visatec GmbH, a DEKRA company.

The camera 12 is being used to obtain a General Visual Inspection (GVI) and a Close Visual Inspection (CVI) of the inside of the vessel 10.

Figure 2 shows a visual image of an inside 16 of the vessel 10 taken underwater.

Figure 3 shows the camera 12 on the pole 14, at the bottom of the vessel 10 and objects 18 on an inside 16 the vessel 10.

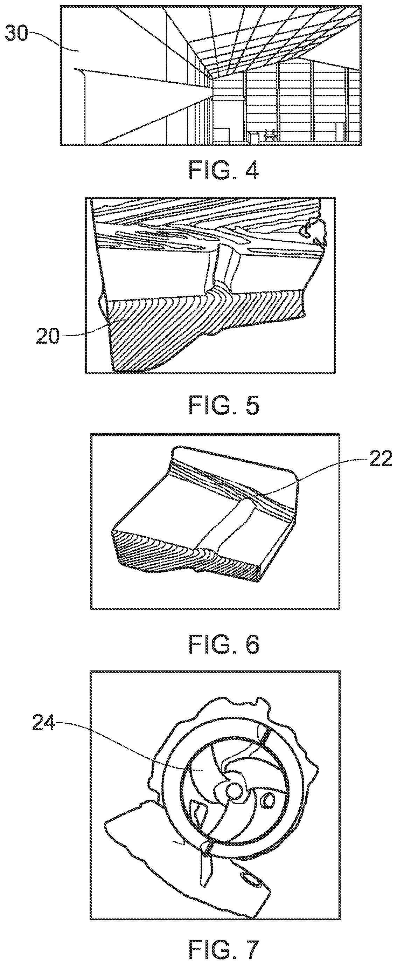

Figure 4 shows a laser point cloud image 30. The point cloud image 30 is a low-resolution image of surfaces of the inside of a building. The building has been used as an example and is equivalent to the vessel herein described.

The point cloud image 30 has been obtained using the first three-dimensional scanner. The image 30 is a low-resolution image of the surfaces of the inside of the vessel. The first three-dimensional scanner is a non-contact active, time-of-flight based 3D scanner.

Figure 5 shows a high-resolution image of an object 20 inside the vessel. Figure 6 shows a model 22 of the object 20 shown in Figure 4, produced using a 3D printer.

The second three-dimensional scanner has been used to obtain a high-resolution image of the object 20 inside the vessel 10. The second three-dimensional scanner is a non-contact active, triangulation based 3D scanner. The second three-dimensional scanner is a short range scanner.

The short range scanner has been used to produce data which has then be replicated to a high accuracy and used to produce the model 22 of the object 20 using a 3D printer.

Figure 7 shows a photogrammetric image of another object 24 inside the vessel.

Modifications and improvements can be incorporated herein without departing from the scope of the invention.

## Claims

1. A method of inspecting the inside (16) of a vessel (10), the method including the steps of:
obtaining a visual image of the inside of the vessel using a camera (12); using a first three-dimensional scanner to obtain a low-resolution image (30) of
one or more surfaces of the inside of the vessel, **characterized in that** the method further comprises using a second three-dimensional scanner to obtain a high-resolution image of
one or more objects (18, 20, 24) inside of the vessel.

2. The method according to claim 1, the method further including the step of positioning the camera (12) at different levels inside (16) the vessel (10), the camera being mounted to a pole (14).

3. The method according to claim 2, the camera (12) being attached to the pole (14) with an articulated joint.

4. The method according to any preceding claim, wherein the camera (12) has one or more of pan, tilt, zoom and integral lighting functionality.

5. The method according to any preceding claim, wherein the camera (12) and/or the first and second three-dimensional scanner, is capable of operating in extreme conditions, including toxic gases, high levels of heat and humidity.

6. The method according to any preceding claim, the method further including the step of using the camera (12) to obtain a plurality of visual images in quick succession.

7. The method according to any preceding claim, wherein the step of using the second three-dimensional scanner to obtain a high-resolution image of one or more objects (18, 20, 24) inside (16) of the vessel (10) is used to obtain linear dimensions of the one or more objects.

8. The method according to any preceding claim, wherein the second three-dimensional scanner is a short range scanner capable of scanning the one or more objects (18, 20, 24) with an accuracy of ±0.1mm; and optionally wherein the short range scanner produces data which is then used to produce a model (22) of the object using a 3D printer.

9. The method according to any preceding claim, wherein the second three- dimensional scanner is a non-contact active, triangulation based 3D scanner.

10. The method according to any preceding claim, wherein using the first three- dimensional scanner the one or more surfaces of the inside (16) of the vessel (10) are scanned with an accuracy of ±2mm.

11. The method according to any preceding claim, wherein the low-resolution image (30) of the one or more surfaces of the inside (16) of the vessel (10) is a three-dimensional image of the inside of the vessel and is used to assess for any structural deformation of the vessel.

12. The method according to any preceding claim, wherein the first three-dimensional scanner is a non-contact active, time-of-flight based 3D scanner.

13. The method according to any preceding claim, wherein the method further includes the step of stabilising the camera (12) and/or the first and second three-dimensional scanner are stabilised, that is the camera and/or the first and second three-dimensional scanners are releasably attached to the vessel (10).

14. The method according to any preceding claim, wherein the first and second three-dimensional scanners emit light, laser light, ultrasound or x-ray.

15. The method according to any preceding claim, wherein the method includes at least partially filling the vessel (10) with water, the method further including mounting the camera, first three-dimensional scanner, and second three-dimensional scanner to a Remotely Operated Vehicle (ROV) and putting the ROV in the vessel to inspect the inside (16) of the vessel.

## Patentansprüche

1. Verfahren zum Inspizieren des Inneren (16) eines Schiffes (10), wobei das Verfahren die folgenden Schritte beinhaltet:
Erhalten eines visuellen Bildes des Inneren des Schiffes unter Verwendung einer Kamera (12);
Verwenden eines ersten dreidimensionalen Scanners, um ein Bild mit niedriger Auflösung (30) von einer oder mehreren Flächen des Inneren des Schiffes zu erhalten, **dadurch gekennzeichnet, dass** das Verfahren ferner
Verwenden eines zweiten dreidimensionalen Scanners umfasst, um ein Bild mit hoher Auflösung von einem oder mehreren Objekten (18, 20, 24) innerhalb des Schiffes zu erhalten.

2. Verfahren nach Anspruch 1, wobei das Verfahren ferner den Schritt des Positionierens der Kamera (12) auf unterschiedlichen Ebenen innerhalb (16) des Schiffes (10) umfasst, wobei die Kamera an einer Stange (14) montiert ist.

3. Verfahren nach Anspruch 2, wobei die Kamera (12) mit einer Gelenkverbindung an der Stange (14) angebracht ist.

4. Verfahren nach einem vorhergehenden Anspruch, wobei die Kamera (12) eines oder mehrere von Funktionalität des Schwenkens, Neigens, von Zoom und zur integrierten Beleuchtung aufweist.

5. Verfahren nach einem vorhergehenden Anspruch, wobei die Kamera (12) und/oder der erste und der zweite dreidimensionale Scanner dazu in der Lage ist, unter extremen Bedingungen zu arbeiten, einschließlich toxischer Gase, hohen Graden an Hitze und Feuchtigkeit.

6. Verfahren nach einem vorhergehenden Anspruch, wobei das Verfahren ferner den Schritt des Verwendens der Kamera (12) beinhaltet, um eine Vielzahl von visuellen Bildern in schneller Folge zu erhalten.

7. Verfahren nach einem vorhergehenden Anspruch, wobei der Schritt des Verwendens des zweiten dreidimensionalen Scanners, um ein Bild mit hoher Auflösung von einem oder mehreren Objekten (18, 20, 24) innerhalb (16) des Schiffes (10) zu erhalten, verwendet wird, um lineare Abmessungen des einen oder der mehreren Objekte zu erhalten.

8. Verfahren nach einem vorhergehenden Anspruch, wobei der zweite dreidimensionale Scanner ein Nahbereichsscanner ist, der dazu in der Lage, ist das eine oder die mehreren Objekte (18, 20, 24) mit einer Genauigkeit von ± 0,1 mm zu scannen; und wobei optional der Nahbereichsscanner Daten erzeugt, die dann verwendet werden, um ein Modell (22) des Objekts unter Verwendung eines 3D-Druckers zu erzeugen.

9. Verfahren nach einem vorhergehenden Anspruch, wobei der zweite dreidimensionale Scanner ein berührungsloser aktiver 3D-Scanner auf Triangulationsbasis ist.

10. Verfahren nach einem vorhergehenden Anspruch, wobei unter Verwendung des ersten dreidimensionalen Scanners die eine oder die mehreren Flächen des Inneren (16) des Schiffes (10) mit einer Genauigkeit von ± 2 mm gescannt werden.

11. Verfahren nach einem vorhergehenden Anspruch, wobei das Bild mit niedriger Auflösung (30) der einen oder mehreren Flächen des Inneren (16) des Schiffes (10) ein dreidimensionales Bild des Inneren des Schiffes ist und verwendet wird, um jegliche strukturelle Verformung des Schiffes zu beurteilen.

12. Verfahren nach einem vorhergehenden Anspruch, wobei der erste dreidimensionale Scanner ein berührungsloser aktiver 3D-Scanner auf Flugzeitbasis ist.

13. Verfahren nach einem vorhergehenden Anspruch, wobei das Verfahren ferner den Schritt des Stabilisierens der Kamera (12) beinhaltet und/oder der erste und der zweite dreidimensionale Scanner stabilisiert werden, das heißt, die Kamera und/oder der erste und der zweite dreidimensionale Scanner werden lösbar an dem Schiff (10) angebracht.

14. Verfahren nach einem vorhergehenden Anspruch, wobei der erste und der zweite dreidimensionale Scanner Licht, Laserlicht, Ultraschall oder Röntgenstrahlen emittieren.

15. Verfahren nach einem vorhergehenden Anspruch, wobei das Verfahren das zumindest teilweise Füllen des Schiffes (10) mit Wasser beinhaltet, wobei das Verfahren ferner das Montieren der Kamera, des ersten dreidimensionalen Scanners und des zweiten dreidimensionalen Scanners an einem ferngesteuerten Fahrzeug (ROV) und das Einsetzen des ROV in das Schiff beinhaltet, um das Innere (16) des Schiffes zu inspizieren.

## Revendications

1. Procédé d'inspection de l'intérieur (16) d'une cuve (10), le procédé comprenant les étapes de :
obtention d'une image visuelle de l'intérieur de la cuve à l'aide d'une caméra (12) ; utilisation d'un premier dispositif de balayage tridimensionnel pour obtenir une image basse résolution (30) d'une ou plusieurs surfaces de l'intérieur de la cuve, **caractérisé en ce que** le procédé comprend en outre l'utilisation d'un second dispositif de balayage tridimensionnel pour obtenir une image haute résolution d'un ou plusieurs objets (18, 20, 24) à l'intérieur de la cuve.

2. Procédé selon la revendication 1, ledit procédé comprenant en outre l'étape de positionnement de la caméra (12) à différents niveaux à l'intérieur (16) de la cuve (10), la caméra étant montée sur un mât (14).

3. Procédé selon la revendication 2, ladite caméra (12) étant fixée au mât (14) avec un joint articulé.

4. Procédé selon l'une quelconque des revendications précédentes, ladite caméra (12) possédant une ou plusieurs fonctionnalités de panoramique, d'inclinaison, d'agrandissement et d'éclairage intégré.

5. Procédé selon l'une quelconque des revendications précédentes, ladite caméra (12) et/ou lesdits premier et second dispositifs de balayage tridimensionnel, étant capables de fonctionner dans des conditions extrêmes, comprenant des gaz toxiques, des niveaux élevés de chaleur et d'humidité.

6. Procédé selon l'une quelconque des revendications précédentes, ledit procédé comprenant en outre l'étape d'utilisation de la caméra (12) pour obtenir une pluralité d'images visuelles en succession rapide.

7. Procédé selon l'une quelconque des revendications précédentes, ladite étape d'utilisation du second dispositif de balayage tridimensionnel pour obtenir une image haute résolution d'un ou plusieurs objets (18, 20, 24) à l'intérieur (16) de la cuve (10) étant utilisée pour obtenir des dimensions linéaires d'un ou plusieurs objets.

8. Procédé selon l'une quelconque des revendications précédentes, ledit second dispositif de balayage tridimensionnel étant un dispositif de balayage à courte portée capable de balayer le ou les objets (18, 20, 24) avec une précision de ±0,1 mm ; et éventuellement ledit dispositif de balayage à courte portée produisant des données qui sont ensuite utilisées pour produire un modèle (22) de l'objet à l'aide d'une imprimante 3D.

9. Procédé selon l'une quelconque des revendications précédentes, ledit second dispositif de balayage tridimensionnel étant un dispositif de balayage 3D actif sans contact basé sur la triangulation.

10. Procédé selon l'une quelconque des revendications précédentes, à l'aide du premier dispositif de balayage tridimensionnel, ladite ou lesdites surfaces de l'intérieur (16) de la cuve (10) étant balayées avec une précision de ±2 mm.

11. Procédé selon l'une quelconque des revendications précédentes, ladite image basse résolution (30) de la ou des surfaces de l'intérieur (16) de la cuve (10) étant une image tridimensionnelle de l'intérieur de la cuve et étant utilisée pour évaluer toute déformation structurelle de la cuve.

12. Procédé selon l'une quelconque des revendications précédentes, ledit premier dispositif de balayage tridimensionnel étant un dispositif de balayage 3D actif sans contact basé sur le temps de vol.

13. Procédé selon l'une quelconque des revendications précédentes, ledit procédé comprenant en outre l'étape de stabilisation de la caméra (12) et/ou lesdits premier et second dispositifs de balayage tridimensionnel étant stabilisés, c'est-à-dire que la caméra et/ou lesdits premier et second dispositifs de balayage tridimensionnel étant fixés de manière amovible à la cuve (10).

14. Procédé selon l'une quelconque des revendications précédentes, lesdits premier et second dispositifs de balayage tridimensionnel émettant une lumière, une lumière laser, des ultrasons ou des rayons X.

15. Procédé selon l'une quelconque des revendications précédentes, ledit procédé comprenant au moins partiellement le remplissage de la cuve (10) avec de l'eau, le procédé comprenant en outre le montage de la caméra, du premier dispositif de balayage tridimensionnel et du second dispositif de balayage tridimensionnel sur un véhicule télécommandé (ROV) et la mise en place du ROV dans la cuve pour inspecter l'intérieur (16) de la cuve.
